Europäisches Patentamt

European Patent Office

Office européen des brevets

(11) Veröffentlichungsnummer: **0 468 174 A1**

# EUROPÄISCHE PATENTANMELDUNG

(21) Anmeldenummer: **91109231.0**

(22) Anmeldetag: **06.06.91**

(51) Int. Cl.5: **B60J 10/08**, B60J 10/02

(30) Priorität: **27.07.90 DE 9011083 U**

(43) Veröffentlichungstag der Anmeldung:
**29.01.92 Patentblatt 92/05**

(84) Benannte Vertragsstaaten:
**AT BE CH DE DK ES FR GB GR IT LI LU NL SE**

(71) Anmelder: **Hutchinson Gummiwarenfabrik GmbH**
**Hansastrasse 66**

**W-6800 Mannheim(DE)**

(72) Erfinder: **Hartl, Alfred**
**Zipserstr. 53**
**W-6700 Ludwigshafen(DE)**

(74) Vertreter: **Ratzel, Gerhard, Dr.**
**Seckenheimer Strasse 36a**
**W-6800 Mannheim 1(DE)**

(54) **Dichtprofil mit partieller Einfärbung.**

㊼ Die Erfindung betrifft ein Dichtprofil (1) mit partieller Einfärbung für Fenster, Windschutzscheiben, Schiebedächer, Türen oder ähnliche Fahrzeugteile, wobei das Dichtprofil aus Gummi geschaffen ist und mindestens eine partielle Einfärbung (2) aufweist die als Schicht vorliegt. Mittels eines Onlineprozesses wird das Profil (1) in einem Vorgang unter Verwendung eines mehrkanaligen Mundstücks hergestellt, dem beispielsweise drei Extruder zugeordnet sind, wobei das Zusammentreffen der verschiedenen Komponenten im Mundstück geregelt stattfindet. Hierbei erfolgt die partielle Einfärbung, wobei die partielle Einfärbung ein Element der Koextrusion ist.

Bevorzugterweise findet Polyolefin Anwendung welches eine erhöhte Affinität zum Grundwerkstoff Kautschuk besitzt.

Fig.2

4/7

Die Erfindung betrifft ein Dichtprofil für Fenster, Windschutzscheiben, Schiebedächer, Türen oder ähnliche Fahrzeugteile.

Dichtprofile für vorzugsweise Fahrzeugteile aller Art unterliegen bestimmten Voraussetzungen, um den modernen Fahrzeugbau gerecht zu werden.

So muß z. B. bei einer Türabdichtung eines Fahrzeuges ein solches Dichtprofil naturgemäß zuverlässig abdichten, auf die Karosserie auf einfachste Weise aufbringbar sein, so daß es sich nicht selbsttätig von der Karosserie lösen kann und dabei im Fahrzeuginneren, beispielsweise den "Fahrzeughimmel" einfassen, wobei der nach innen weisende Teil des Dichtprofils farblich dem Fahrzeuginnenraum anzupassen ist.

Dies konnte bisher nur durch sogenannte Kompositteile erreicht werden. Solche Kompositteile sind beispielsweise Dichtprofile, bei denen eines oder mehrere Teile aus unterschiedlichen Materialien besteht. Es werden hierbei Baustoffe verschiedener Art in Verbindung gebracht, wobei der Vorteil erreicht wird, daß das jeweilige Material mit den gewünschten Eigenschaften an bestimmten Stellen angeordnet wird.

Beispielsweise wird ein Dichtprofil dadurch geschaffen, daß als eigentlicher Dichtkörper ein Gummischlauch verwendet wird, wobei ein Dichtkörper in Kompositbauweise einem Klemmsockel aus Thermoplast angefügt wird, der zur Verbindung mit der KFZ-Karosserie dient.

Bei solchen Kompositteilen hat es sich gezeigt, daß bei Wärmeeinwirkung der Klemmsockelbereich verformt wird und beim Erkalten keine Rückstellung erfolgt. Das Resultat ist, daß keine Klemmwirkung mehr zwischen Dichtprofil bzw. Klemmsockel und der Fahrzeugkarosserie vorliegt und sich die Dichtung ablöst.

Aus dem deutschen Gebrauchsmuster G 89 12 574.6 ist ein Kompositteil zu Dichtungszwecken bekannt, bei dem eines oder mehrere Teile aus unterschiedlichen Materialien besteht, wobei eine sehr zuverlässige Abdichtkomponente verwendet wird, die eine mittlere Wärmebeständigkeit, hervorragende Licht-, UV- und Ozon-Beständigkeit sowie Beständigkeit gegen schwache Basen und Säuren und eine bedingte Beständigkeit gegen Mineralöle aufweist und der eigentliche Klemmsockel große Klemmkräfte hervorruft, die auch bei hohen Temperaturen konstant bleiben und der Klemmsockel entsprechend den Dekorvoraussetzungen einfärbbar ist, indem der Klemmsockel aus einer, ein verformbares Metallband einbettenden Kunststoffhülle mit einer hieran angeodneten Lippe besteht, während das Dichtungsprofil aus Gummi geschafen ist und die Kunststoffhülle aus einem Thermoplasten oder Elastomer sowie die Lippen aus einem vernetzbaren Polyurethan bestehen.

Mit diesem Kompositteil ist allen Erfordernissen der modernen Fahrzeugindustrie Rechnung getragen. Jedoch zeichnet sich das Herstellungsverfahren bei der Verwendung von einer Vielzahl von Komponenten gegebenenfalls als aufwendig und kostspielig.

Andererseits ist bei der Montage solcher Dichtprofile darauf zu achten, daß der Elastizitätsbereich beim Aufsetzen und somit Aufliegen des Profils nicht überschritten wird, da sonst ein Nachdrücken während der Montage erforderlich ist.

Der vorliegenden Erfindung liegt daher die Aufgabe zugrunde, ein Dichtprofil für Fenster, Windschutzscheiben, Schiebedächer, Türen oder ähnliche Fahrzeugteile zu schaffen, das die Verwendung mehrerer unterschiedlicher Materialien, wie dies bei Kompositteilen der Fall ist, überflüssig macht.

Diese Aufgabe wird durch ein Dichtprofil gemäß des Anspruchs 1 gelöst.

Besonders bevorzugte Ausführungsformen der Erfindung sind in den Unteransprüchen gekennzeichnet, wobei das Dichtprofil aus Gummi geschaffen ist und mindestens eine partielle Einfärbung aufweist.

Die partielle Einfärbung liegt bei diesen Profilen als Schicht vor, die mit der dem darunter angeordneten Dicht- bzw. Klemmkörper eine homogene Verbindung darstellt.

Vorzugsweise ist die partielle Einfärbung des Dichtprofils an dem zum Fahrzeuginnenraum hinweisenden Bereich des Dichtprofils angeordnet, wobei das Dichtprofil in eine Abdichtzone und Klemmzone sowie Dekorzone aufgeteilt ist.

Vorzugsweise ist die partielle Einfärbung im Bereich der Dekorzone vorgesehen.

In einer besonders bevorzugten Ausführungsform der Erfindung ist vorgesehen, daß mindestens der oder die eingefärbten Abschnitte eine Oberflächenstrukturierung aufweisen. Diese Oberflächenstrukturierung weist eine dreidimensionale, d.h. auch in die Tiefe des Dichtprofils sich erstreckende Rauhzone auf. Die Rauhzone besteht aus einer Anhäufung von Erhebungen (Kovexitäten) und Vertiefungen (Kokavitäten). Hierbei wiederholen sich die Konkavitäten und Kovexitäten oder diese sind statistisch, also willkürlich angeordnet.

Anhand den beigefügten Zeichnungen, die besonders bevorzugte Ausführungsformen der Erfindung zeigen, wird diese nun näher erläutert. Dabei zeigen:

Figur 1    eine einfache Ausführungsform eines Dichtprofils;

Figur 2    ein Dichtprofil mit deutlich getrennter Dichtzone, Klemmzone und Dekorzone.

Mittels eines Onlineprozesses wird das Profil in einem Vorgang hergestellt. Man verwendet hierbei ein mehrkanaliges Mundstück, dem beispielsweise drei Extruder zu geordnet sind, wobei das Zusammentreffen der verschiedenen Komponenten im Mundstück geregelt stattfindet. Hierbei erfolgt die partielle Einfärbung, wobei die partielle Einfärbung ein Element der Koextrusion ist.

Bevorzugterweise findet Polyolefin Anwendung, welches eine erhöhte Affinität zum Grundwerkstoff Kautschuk besitzt.

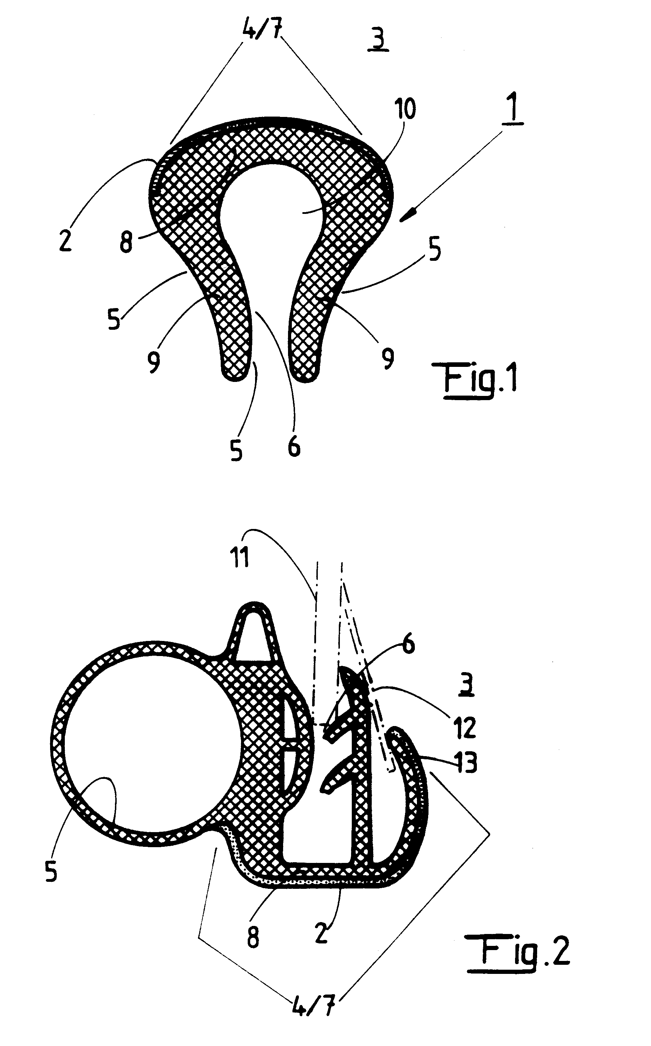

Figur 1 zeigt ein Dichtprofil 1 in einer einfachen Ausführungsform.

Es weist einen U-förmigen Aufbau auf, wobei die Klemmzone 6 durch die nach unten weisenden Schenkel 9 des U-Profils gebildet werden, indem diese nach innen gezogen werden, so daß sich der Hohlraum 10 verjüngt. Durch diese Ausbildung wird eine zuverlässige Klemmkraft durch die Schenkel 9 erreicht. Je nach Einsatz bzw. Position dieses Dichtprofils 1 kann die Abdichtzone 5 an den Außenseiten der Schenkel 9 oder auch im Bereich der Klemmzone 6 zum Liegen kommen.

In diesem Ausführungsbeispiel befindet sich die Dekorzone 7 in dem zum Fahrzeuginnenraum 3 hinweisenden Bereich 4 des Dichtprofils 1. In dieser Zone ist die partielle Einfärbung 2 in Form einer Schicht angeordnet, die mit dem darunter angeordneten Dichtkörper 8 eine homogene Verbindung darstellt, da diese aus dem gleichen Material, und zwar Gummi, geschaffen sind.

Die Figur 2 zeigt ein weiteres Ausführungsbeispiel eines Dichtprofiles 1. Auch dieses Dichtprofil 1 ist deutlich in eine Abdichtzone 5, eine Klemmzone 6 sowie eine Dekorzone 7 eingeteilt. In der Abdichtzone 5 kommt die Fahrzeugtür zum Anliegen, während in der Klemmzone 6 der Flansch oder Steg 11 der Fahrzeugkarosserie eingebracht wird.

Zusätzlich ist hierbei noch der "Fahrzeughimmel" 12 in einem ausragenden Arm 13 eingefaßt. Auch in diesem Ausführungsbeispiel ist die Schicht der partiellen Einfärbung 2 in den zum Fahrzeuginnenraum 3 hinweisenden Bereich 4, der Dekorzone 7 angeordnet und mit dem Dicht- bzw. Klemmkörper in einer homogenen Verbindung ausgebildet.

Mit der vorliegenden Erfindung wird ein Dichtprofil geschaffen, mit dem anstelle von Kunststoff (PVC) Gummi verwendet wird, um die Nachteile des Kunststoffes (PVC) zu eliminieren, die sich im Verlust der Klemmwirkung bei Erwärmung (z. B. 80$^\circ$C) erweisen und dadurch die bekannten sogenannten Kompositteile von der KFZ-Karosserie rutschen.

## Patentansprüche

1. Dichtprofil für Fenster, Windschutzscheiben, Schiebedächer, Türen oder ähnliche Fahrzeugteile,
   dadurch gekennzeichnet,
   daß das Dichtprofil (1) aus Gummi geschaffen ist und mindestens eine partielle Einfärbung (2) aufweist.

2. Dichtprofil nach Anspruch 1,
   dadurch gekennzeichnet,
   daß die partielle Einfärbung (2) als Schicht vorliegt.

3. Dichtprofil nach Anspruch 1 bis 2,
   dadurch gekennzeichnet,
   daß die partielle Einfärbung (2) des Dichtprofils (1) an dem zum Fahrzeuginnenraum (3) hinweisenden Bereich (4) des Dichtprofils (1) angeordnet ist.

4. Dichtprofil nach Anspruch 1 bis 3,
   dadurch gekennzeichnet,
   daß das Dichtprofil (1) eine Abdichtzone (5) und Klemmzone (6) sowie eine Dekorzone (7) aufweist.

5. Dichtprofil nach Anspruch 1 bis 4,
   dadurch gekennzeichnet,
   daß die partielle Einfärbung (2) im Bereich der Dekorzone (7) vorgesehen ist.

6. Dichtprofil nach Anspruch 1 bis 5,
   dadurch gekennzeichnet,
   daß die Schicht der partiellen Einfärbung (2) mit dem darunter angeordneten Dicht- bzw. Klemmkörper (8) eine homogene Verbindung darstellt.

7. Dichtprofil nach Anspruch 1 bis 6,
   dadurch gekennzeichnet,
   daß mindestens der oder die eingefärbten Abschnitt(e) eine Oberflächenstrukturierung aufweist (aufweisen).

8. Dichtprofil nach Anspruch 7,
   dadurch gekennzeichnet,
   daß die Oberflächenstrukturierung eine dreidimensionale, d.h. auch in die Tiefe des Dichtprofils sich erstreckende Rauhzone darstellt.

9. Dichtprofil nach Anspruch 8,
   dadurch gekennzeichnet,
   daß die Rauhzone aus einer Anhäufung von Erhebungen (Konvexitäten) und Vertiefungen (Konkavitäten) besteht.

10. Dichtprofil nach Anspruch 9,
    dadurch gekennzeichnet,
    daß sich Konvexitäten und Konkavitäten regelmäßig wiederholen.

**11.** Dichtprofil nach Anspruch 9,
dadurch gekennzeichnet,
daß die Konvexitäten und Konkavitäten statistisch, also willkürlich angeordnet sind.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 347 305 (TOYODA GOSEI)<br>* Seite 5, Zeile 21 - Seite 7, Zeile 17; Figuren *<br>– – – | 1-5 | B 60 J 10/08<br>B 60 J 10/02 |
| A | GB-A-2 065 755 (SAIAG)<br>* Seite 1, Zeile 104 - Seite 2, Zeile 9; Figuren *<br>– – – | 1 | |
| A | FR-A-2 543 207 (MESNEL)<br>* Seite 3; Figuren *<br>– – – – – | 1 | |
|  |  |  | **RECHERCHIERTE SACHGEBIETE (Int. Cl.5)**<br><br>B 60 J |

**Der vorliegende Recherchenbericht wurde für alle Patentansprüche erstellt**

| Recherchenort | Abschlußdatum der Recherche | Prüfer |
|---|---|---|
| Den Haag | 05 September 91 | VANNESTE M.A.R. |